# EUROPÄISCHE PATENTSCHRIFT

(11) **EP 1 129 907 B1**
(45) Veröffentlichungstag und Bekanntmachung des Hinweises auf die Patenterteilung: **18.08.2004**
(21) Anmeldenummer: 00128396.9
(22) Anmeldetag: 22.12.2000
(51) Int. Cl.: B60R 1/074, B60R 1/076

(54) **Aussenrückblickspiegel für ein Kfz.**
Exterior rear view mirror for vehicles
Rétroviseur extérieur pour véhicules

(30) Priorität: 29.02.2000 DE 10009670
(43) Veröffentlichungstag der Anmeldung: 05.09.2001
(73) Patentinhaber: Bühler Motor GmbH, 90459 Nürnberg (DE)
(72) Erfinder: Ochs, Lothar, 96167 Königsfeld (DE)

(56) Entgegenhaltungen:
- EP-A- 0 931 699
- DE-A- 4 427 410
- DE-A- 19 534 639
- US-A- 4 626 083

## Beschreibung

Die Erfindung betrifft einen Außenrückblickspiegel nach dem Oberbegriff des Anspruchs 1.

Ein derartiger Außenrückblickspiegel ist aus der DE-OS 198 33 672 A1 bekannt. Bei dem bekannten Außenrückblickspiegel sind sowohl eine motorische Verstellung als auch ein manuelles Abklappen des Spiegels möglich. Beim manuellen Abklappen in und entgegen der Fahrtrichtung rastet das Zahnrad aus den Rastmitteln am Spiegelfuß aus, wobei der Spiegelkopf in Bezug auf den Spiegelfuß entlang der Schwenkachse relativ verschoben wird. Im ausgerasteten Zustand ist kein Formschluss mehr zwischen Zahnrad und Spiegelfuß vorhanden, sondern Reibschluss, dieser reicht aus, um den Spiegelkopf relativ zum Spiegelfuß motorisch zu schwenken. Soll der Außenrückblickspiegel motorisch in seine Ausgangslage zurückbewegt werden, müssen die Rastmittel miteinander in Übereinstimmung gebracht werden. Dies kann erst geschehen, wenn der Spiegelkopf gegen ein Hindemis anfährt. Dieses Hindernis stellt der Klappwegbegrenzer dar. Der Spiegelkopf muss also zunächst bis in die Parkstellung gefahren werden, wo der Spiegel gegen den Klappwegbegrenzer fährt. Erst in dieser Anschlagstellung kann das Zahnrad relativ zum Spiegelfuß verdreht und somit synchronisiert werden. Erst anschließend kann der Spiegelkopf in die Fahrposition zurückgeschwenkt werden. Diese Prozedur dauert relativ lange und wird vom Benutzers möglicherweise missverstanden.

Daher ist es Aufgabe der vorliegenden Erfindung einen Außenrückblickspiegel so zu gestalten, dass eine rasche Synchronisation der Rastmittel bei manuell abgeklapptem Spiegel ohne unnötige Schwenkbewegungen möglich ist.

Diese Aufgabe wird erfindungsgemäß durch die Merkmale des Anspruchs 1 gelöst. Bei manuell abgeklapptem Spiegelkopf wird der Antrieb betätigt, um den Spiegelkopf wieder in die Fahrposition zu schwenken. Durch die Stopper und Gegenstopper ist ein Hindernis geschaffen worden, das in Fahrposition wirkt und nicht erst am Klappwegbegrenzer. An diesem Hindernis stoppt der Spiegelkopf seine Schwenkbewegung bei betätigtem Antrieb, wobei die Rastmittel wieder in Übereinstimmung gebracht werden (Synchronisation), bis sie wieder einrasten. Es ist also nur noch eine elektrische Verstellung des Spiegels von der abgeklappten Stellung in die Fahrposition notwendig. Durch die kurzen Verstellwege kann der ganze Vorgang relativ rasch erledigt sein. Da die Anschläge in der Fahrposition nur in einer angehobenen Stellung wirken, behindern sie den Gebrauch des Spiegels sowie dessen Abklappfunktion nicht.

Den einfachsten Aufbau erreicht man, indem man die Rastmittel im Spiegelfuß und an einem zum Antrieb gehörenden Zahnrad anordnet. Das Zahnrad ist dann im Normalbetrieb quasi Bestandteil des Spiegelfußes.

Es hat sich bewährt die Rastmittel in Form von Rastnocken und Rastausnehmungen auszuführen, deren Flanken geneigt sind. Diese sind einfach herstellbar und die Ausrastkraft kann durch Wahl der Neigungswinkel definiert werden.

Weiteren Einfluss auf die Ausrastkraft hat eine Feder, mit der das Zahnrad am Spiegelfuß gehalten wird. Vorzugsweise wird das Zahnrad dabei zwischen Spiegelfuß und Spiegelkopf, koaxial zur Schwenkachse angeordnet, wobei es mit dem Antrieb getrieblich in Eingriff steht.

Das Zahnrad und der Spiegelkopf sind im ausgerasteten Zustand in Bezug auf den Spiegelfuß angehoben, dadurch ist der ausgerastete Zustand einfach über einen Tastschalter von einer Elektronik erkennbar. Weiter besteht hierdurch die Möglichkeit auf einfache Weise den Stopper so auszubilden, dass er nur im manuell abgeklappten Zustand wirken kann.

Der Stopper und der Gegenstopper können in Fahrposition einander gegenüberliegend angeordnet sein, dadurch wird der Ausrastvorgang in der Regel nicht behindert, insbesondere, weil die Rastmittel am Zahnrad und am Spiegelfuß in der Regel nicht Stufenförmig ausgebildet sind, so daß während des Ausrastvorgangs auch eine Schwenkbewegung ausgeführt wird.

Es wird bevorzugt, die Stopper und Gegenstopper mit geneigten Stopperflächen auszuführen, dadurch kann der Einrastvorgang gleitend erfolgen. Dies wird weiter begünstigt, wenn die Neigungswinkel der Stopperflächen den Neigungswinkeln der Rastausnehmungen und Rastnocken entspricht.

Es ist möglich, dass die Rastmittel auch bei einer manuellen Abklappbewegung gegen die Fahrtrichtung ausrasten, dann ist es wichtig, dass die Stopper und Gegenstopper dieser Ausrastbewegung nicht im Wege stehen, um Beschädigungen am Antrieb oder am Spiegel zu verhindern. Daher ist vorgesehen, dass im eingerasteten Zustand der Rastmittel der kleinste Abstand des Stoppers vom Gegenstopper in Axialrichtung kleiner ist als der maximale Hub, den der Spiegelkopf gegenüber dem Spiegelfuß beim Ausrasten ausführt. Weiter ist vorgesehen, dass im eingerasteten Zustand der Rastmittel der kleinste Abstand des Stoppers vom Gegenstopper in Axialrichtung größer ist als die Breite des Stoppers, bzw. des Gegenstoppers in Schwenkrichtung an der dem Gegenstopper, bzw. Stopper gegenüberliegenden Seite.

Um Beschädigungen des Antriebs oder des Spiegels durch die Stopper und Gegenstopper zu verhindern, können die Stopper und/oder Gegenstopper auch mit Sollbruchstellen oder als nachgiebige Bauteile ausgeführt sein. Die Gefahr einer Beschädigung ist nur dann gegeben, wenn der Spigel in einer Zwischenstellung zwischen Fahr- und Parkstellung eingestellt ist und eine äußere Kraft auf den Spiegelkopf einwirkt.

Um eine gleichmäßigere Verteilung der auftretenden Kräfte zu erreichen sind mehrere, vorzugsweise zwei Stopper vorgesehen.

Eine sehr einfache Ausführung der Stopper bzw. Gegenstopper wird dadurch erreicht, dass der Gegenstopper am Spiegelfuß durch eine die Druckfeder niederhaltende Scheibe gebildet wird, die an einem ein Teil des Schwenkgelenks bildenden Gelenkrohr verdrehgesichert befestigt ist. Besonders geeignet ist es die Scheibe topfförmig auszubilden, wobei die Gegenstopper an dessen Topfrand angeordnet sind.

Eine weitere Möglichkeit, die Beschädigung des Antriebes oder des Spiegels beim manuellen Abklappen zu verhindern besteht darin, dass eine Reibkupplung zwischen dem Spiegelfuß und dem Zahnrad angeordnet ist, wobei die Reibkupplung nur bei entgegen der Fahrtrichtung manuell abklappendem Spiegel wirksam wird. In Fahrtrichtung sind Anschläge zwischen Spiegelkopf und Spiegelfuß vorgesehen, die ein spielfreies Verspannen des Antriebs erlauben um Vibrationen des Spiegels zu minimieren. Diese sind in Bezug auf die Schwenkrichtung geneigt ausgebildet, um ein Überrasten zu ermöglichen.

Bevorzugt ist, dass das Zahnrad über zumindest eine Reibfläche mit einem mit den Rastmitteln versehenen, im wesentlichen ringförmigen und koaxial zur Schwenkachse angeordneten Rastring flächig verbunden ist, wobei der Rastring zwischen dem Zahnrad und dem Spiegelfuß angeordnet ist, die Rastmittel am Rastring und am Spiegelfuß so geformt sind, dass das Ausrastmoment bei Einwirkung einer in Fahrtrichtung gerichteten äußeren Kraft (F_{IF}) wesentlich kleiner ist als bei Einwirkung einer gegen die Fahrtrichtung gerichteten äußeren Kraft (F_{GF}), das Reibmoment zwischen dem Zahnrad und dem Rastring größer ist als das Ausrastmoment zwischen dem Rastring und dem Spiegelfuß bei Einwirkung einer in Fahrtrichtung gerichteten äußeren Kraft (F_{IF}), aber kleiner als das Ausrastmoment zwischen Rastring und dem Spiegelfuß bei Einwirkung einer gegen die Fahrtrichtung gerichteten äußeren Kraft (F_{GF}). Durch die hohe Reibkraft zwischen dem Zahnrad und dem Rastring verhält sich der Außenrückblickspiegel bei motorischem Antrieb so wie der vorbekannte Außenrückblickspiegel. Bei Einwirkung einer in Fahrtrichtung gerichteten äußeren Kraft (F_{IF}) auf den Spiegelkopf rasten die reibschlüssig mit dem Zahnrad verbundenen Rastmittel des Rastrings aus den Rastmitteln des Spiegelfußes aus, weil die Rastmittel so geformt sind, dass sie in dieser Richtung ausrastbar sind, wobei die Reibkraft höher ist als die Ausrastkraft in Fahrtrichtung. Beim Ausrasten aus den Rastmitteln wird auch der motorisch nicht überwindbare Fahrwegbegrenzer zwischen Spiegelkopf und Spiegelfuß überwunden. Der abgeklappte Spiegelkopf kann anschließend motorisch in die Fahrposition zurückgebracht werden. Bei Einwirkung einer entgegen der Fahrtrichtung gerichteten äußeren Kraft (F_{GF}) auf den Spiegelkopf rastet der reibschlüssig mit dem Zahnrad verbundene Rastring nicht aus den Rastmitteln des Spigelfußes aus, weil die Rastmittel so geformt sind, dass sie in dieser Richtung blockieren. Die Reibkraft zwischen dem Zahnrad und dem Rastring kann aus diesem Grund durch die äußere Kraft überwunden werden, bis der Fahr- bzw. der Klappwegbegrenzer erreicht ist. Anschließend kann der Spiegel motorisch in die Fahrposition zurückgebracht werden, ohne dass ein Synchronisationsvorgang zwischen den Rastmitteln am Rastring und den Rastmitteln am Spiegelfuß eingeleitet werden muss, denn die Zuordnung zwischen dem Rastring und dem Spiegelfuß bleibt auch bei diesem erzwungenen Vorgang erhalten. Dies verringert die notwendige Zeit für den Rückstellvorgang und vereinfacht auch die hierfür ggfs. vorhandene Steuerung.

Bei einer bevorzugten Ausführungsform sind die Rastmittel in Form von Rastnocken und Rastausnehmungen ausgebildet, deren Flanken unterschiedlich geneigt sind. Durch die unterschiedliche Neigung der Flanken ist ein Ausrasten nur in eine Richtung möglich. Dabei ist es unerheblich, ob die Rastausnehmungen bzw. die Rastnocken im Rastring oder im Spiegeflfuß angeordnet sind.

Um in allen Situationen eine motorische Rückstellung des Spiegelkopfs in die Fahrposition zu ermöglichen, ist vorgesehen, dass der Spiegelkopf in Bezug auf den Spiegelfuß mehrere Höhenniveaus einnehmen kann, wobei auf allen Höhenniveaus und in allen Drehwinkelstellungen des Spiegelkopfs Reibschluß zwischen dem Zahnrad und dem Rastring besteht, der durch die Druckfeder aufrecht erhalten wird. Die kraftschlüssige Verbindung zwischen dem Rastring und dem Zahnrad würde unterbrochen werden, wenn Teile des Spiegelkopfs im ausgerasteten Zustand auf Teilen des Spiegelfußes aufsitzen würden. Um dies zu verhindern muß in dieser Stellung zumindest ein geringer Spalt zwischen Spiegelkopf und Spiegelfuß in Schwenkachsrichtung vorhanden sein.

Damit ein durch eine äußere Kraft bewirktes Abklappen in Fahrtrichtung möglich ist, muß der Fahrwegbegrenzer zwischen Spiegelkopf und Spiegelfuß überwunden werden und der Spiegelkopf in Bezug auf den Spiegelfuß zwei Höhenniveaus (H, L), ein niedriges (L) und ein mittleres (H) einnehmen können. Um vom niedrigen Niveau (L) auf das mittlere Höhenniveau (H) zu gelangen, muß bei einer besonders vorteilhaften Ausführungsform der Erfindung ein drittes Höhenniveau (Z) überwunden werden. Dieses dritte Höhenniveau (Z) soll dabei nicht bleibend eingenommen werden, sondem bei Einwirkung einer äußeren Kraft nur kurzzeitig erreicht und sofort wieder verlassen werden. Das dritte Höhenniveau (Z) soll motorisch weder vom Höhenniveau (L), noch vom Höhenniveau (H) aus erreichbar sein. Dadurch ist ausgeschlossen, dass bei Fehlbedienung des Außenrückblickspiegels ein Einrasten des Rastsrings in die Rastmittel des Spiegelfußes in einer nach vorne in Fahrtrichtung abgeklappten Spiegelposition möglich ist. Diese Fehlbedienung ist dann gegeben, wenn der abgeklappte Spiegel motorisch weiter in Fahrtrichtung betätigt wird, bis der Klappwegbegrenzer erreicht ist. Dann würde sich das Zahnrad so bewegen, als ob es das dritte Höhenniveau (Z) erreichen wollte, da dies motorisch nicht möglich ist, blockiert der Antrieb an dieser Stelle. Wäre das dritte Höhenniveau (Z) nicht vorhanden, dann würde der Rastring in die Rastmittel des Spiegelfußes einrasten und der Spiegelkopf unter der Kraft der Druckfeder direkt am Spiegelfuß aufliegen. Damit wäre die reibschlüssige Verbindung zwischen dem Zahnrad und dem Rastring unterbrochen und keine weitere motorische Betätigung mehr möglich.

Damit nicht die Gefahr besteht das dritte Höhenniveau (Z) bleibend zu erreichen, sind gleich im Anschluss an die Rastausnehmungen vorspringende Anformungen vorgesehen. In dieser Position ist das maximale, durch die Einwirkung eines von einer äußeren Kraft erzeugten und auf den Spiegelkopf einwirkende Moment zu erwarten. Das zur Ausrastung notwendige Moment ist so hoch, dass es auf kurzem Weg bzw. in kurzer Zeit nicht soweit abgebaut werden kann dass der Spiegelkopf das dritten Höhenniveau (Z) bleibend erreichen kann.

Es ist zweckmäßig, dass das niedrige Höhenniveau (L) nur zwischen der Fahrposition (F) und der Parkposition (P) möglich ist, dadurch ist gewährleistet, dass keine Situation möglich ist, in der ein in Fahrtrichtung nach vorne abgeklappter Spiegel in eine motorisch nicht mehr rückführbare Position geraten kann.

Es ist auch vorgesehen, dass das zweite Höhenniveau (H) nur in nach vorne in Fahrtrichtung abgeklappten Spiegelpositionen (K) möglich ist, damit ist eine Abnutzung der Rastmittel am Spiegelfuß nur beim selteneren Abklappen durch eine äußere Kraft (F_{IF}) in Fahrtrichtung möglich. Zusätzlich nehmen hierbei die Fahrwegbegrenzer einen Teil der auftretenden Kräfte auf.

Damit sicher ist, dass das dritte Höhenniveau (Z) nur kurzzeitig erreicht wird, ist es notwendig, dass das dritte Höhenniveau (Z) nur zwischen der Fahrposition (F) und einer nach vorne in Fahrtrichtung abgeklappten Spiegelposition (K) möglich ist. In dieser Position ist, wie erwähnt, das Moment am größten, das notwendig ist, um den Spiegel überhaupt abklappen zu können, wird dieses aufgebracht, ist es kaum möglich es schnell genug wieder so weit zu verringern, dass das dritte Höhenniveau (Z) beibehalten wird. Es ist auch zweckmäßig die vorspringende Anformung am Rastring bzw. am Spiegelfuß so zu gestalten, dass keine stabile Positionierung auf dem dritten Höhenniveau möglich ist. Würde das dritte Niveau bleibend erreichbar sein, wäre zwar eine motorische Verstellung weiter möglich, jedoch könnte eine Fehlbedienung, wie erwähnt, zu einer Fehlfunktion führen.

Der Übergang zwischen dem mittleren Höhenniveau (H) und dem dritten Höhenniveau (Z) ist vorzugsweise als Anschlag ausgebildet, wobei der Anschlag als in Bezug auf die Schwenkebene geneigte Fläche ausgebildet ist. Dadurch ist es möglich den Spiegel auch von Hand unter Überwindung des dritten Höhenniveaus (Z) in die Fahrposition zurückzubringen. Da das dritte Höhenniveau (Z) motorisch jedoch nicht erreichbar sein soll, ist die Neigung der Fläche des Anschlags entsprechend ausgelegt.

Nach einer bevorzugten Weiterbildung der Erfindung ist die Reibfläche zwischen dem Zahnrad und dem Rastring konusförmig ausgebildet. Durch den Konus wird die Reibkraft zwischen dem Zahnrad und dem Rastring stark erhöht. Durch die Wahl des Neigungswinkels ist die Reibkraft den Erfordemissen anpaßbar.

Ausführungsbeispiele der Erfindung werden nachfolgend anhand der Zeichnung näher erläutert. Es zeigen:
- Fig. 1: einen Teil eines Antriebes für einen Kfz-Außenrückblickspiegel im Schnitt, mit Stoppereinrichtung,
- Fig. 2: eine räumliche Darstellung des Antriebes nach Fig. 1 mit Stoppereinrichtung,
- Fig. 3a, 3b, 3c: verschiedene Varianten der Stoppereinrichtung nach Fig. 1,
- Fig. 4: eine Prinzipskizze einer bevorzugten Weiterbildung der Rasteinrichtung des Antriebes in einer ersten Stellung (hier der Einfachheit halber ohne Stoppereinrichtung),
- Fig. 5: eine Prinzipskizze der Rasteinrichtung nach Fig. 4 in einer zweiten Stellung (der Einfachheit halber ohne Stoppereinrichtung),
- Fig. 6: eine Schnittansicht durch ein Zahnrad und einen Rastring nach Fig. 4,
- Fig. 7: eine Explosionsdarstellung des Antriebs nach Fig. 4 (hier der Einfachheit halber ohne Stoppereinrichtung),
- Fig. 8: eine Schnittansicht durch eine Schwenkachse des Antriebs nach Fig. 4 (hier der Einfachheit halber ohne Stoppereinrichtung),
- Fig. 9: eine vereinfachte Explosionsdarstellung des Antriebs nach Fig. 4 (hier der Einfachheit halber ohne Stoppereinrichtung),
- Fig. 10: ein Außenrückblickspiegel mit Antrieb,
- Fig. 11: der Außenrückblickspiegel in drei verschiedenen Stellungen,
- Fig. 12: eine Prinzipskizze von Rastmitteln nach Fig. 4 in einer ersten Stellung,
- Fig. 13: eine Prinzipskizze der Rastmittel nach Fig. 4 in einer zweiten Stellung und
- Fig. 14: eine Prinzipskzze der Rastmittel nach Fig. 4 in einer dritten Stellung.

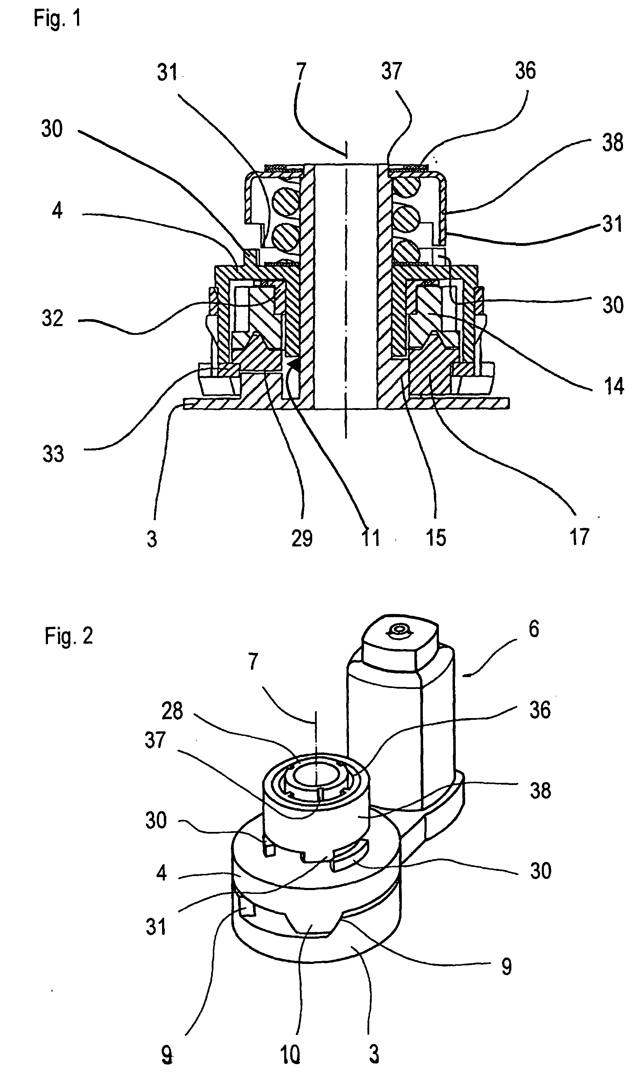

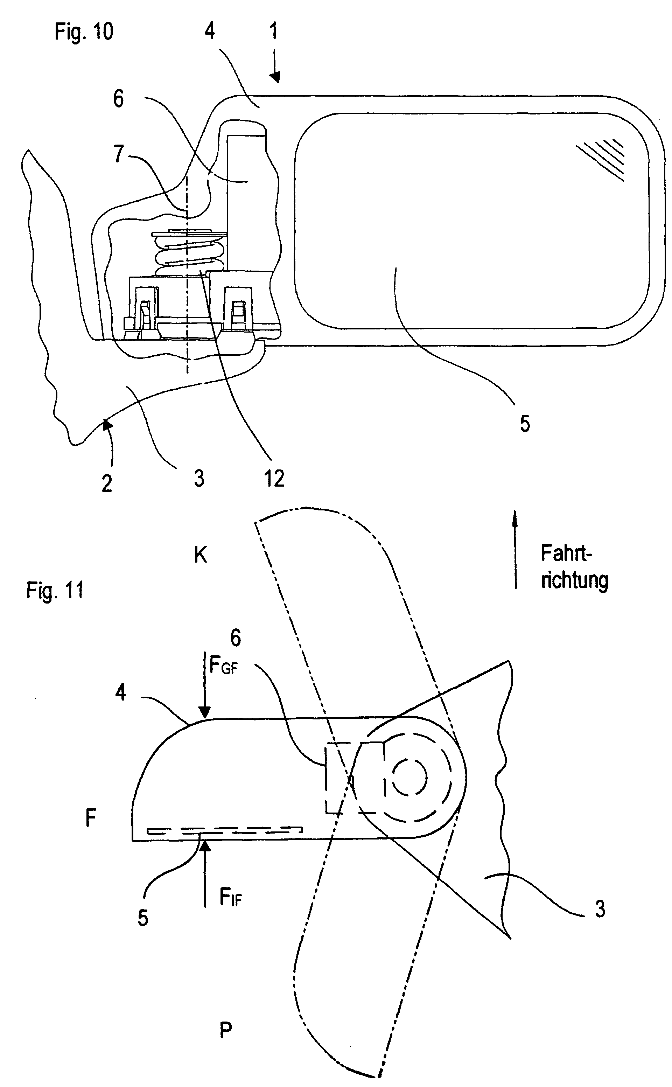

Fig. 1 zeigt einen Teil eines Antriebes für einen Kfz-Außenrückblickspiegel (siehe Fig. 10) im Schnitt, mit Stoppereinrichtung, dieser erlaubt es, auf die an sich unnötigen Verfahrwege beim Synchronisationsvorgang zu verzichten. Um dies zu erreichen, sind nur geringe Veränderungen an dem bekannten Außenrückblickspiegel vorzunehmen. Der Kfz-Außenrückblickspiegel besteht im wesentlichen aus einem karosseriefesten Spiegelfuß 3 und einem um eine Schwenkachse schwenkbaren Spiegelkopf 4. Es muss dafür gesorgt werden, dass ein Stopper 30 in Nähe der Fahrposition (siehe Fig. 11) vorhanden ist, der nur in einer abgehobenen Stellung des Spiegelkopfes 4 wirken kann, um den Außenrückblickspiegel auch in die Parkstellung (P) fahren zu können Fig. 1 zeigt die nicht abgehobene Stellung. Die abgehobene Stellung wird nur durch eine von außen auf den Spiegelkopf 4 einwirkende Kraft erreicht, wobei Rastmittel zwischen dem Spiegelfuß 3 und einem Zahnrad 14 ausrasten. In Fig. 2 ist eine einfache Realisierungsmöglichkeit dargestellt. Der Stopper 30, der vorzugsweise einstückig mit dem Spiegelkopf 4 ist, hat im Normalbetrieb keine Möglichkeit mit einem spiegelfußfesten Gegenstopper 31 in Anlage zu kommen. Ist der Spiegelkopf 4 jedoch nach vome in Fahrtrichtung (K) abgeklappt und in Bezug auf einen Spiegelfuß 3 angehoben, ist ein Anschlagen zwischen Stopper 30 und Gegenstopper 31 möglich. Die Lage der Stopper 30 und Gegenstopper 31 ist so gewählt, dass die Synchronisation in Fahrposition erfolgen kann. Grundsätzlich kann jedoch jede beliebige Position hierfür gewählt werden. Um den spiegelfußseitigen Gegenstopper 31 zu realisieren, ist lediglich eine Scheibe 38 zum Niederhalten einer Druckfeder zu einem Topf geformt, an dessen Topfrand die Gegenstopper 31 angeordnet sind. Vorzugsweise sind mindestens zwei Stopper 30 und mindestens zwei Gegenstopper 31 vorgesehen.

Fig. 2 zeigt eine räumliche Darstellung des erfindungsgemäßen Antriebs 6 nach Fig. 1, mit dem Spiegelfuß 3 einem Anschlagmittel 9, einem Gegenanschlagmittel 10 am Spiegelkopf 4, dem Stopper 30, der topfförmigen Scheibe 38 mit dem Gegenstopper 31, einer Zahnscheibe 36, die an einem Gelenkrohr 28 befestigt ist, einer Verzahnung 37 zwischen der topfförmigen Scheibe 38 und dem Gelenkrohr 28, durch welche die Zuordnung des Stoppers 30 zum Gegenstopper 31 definiert ist. Die Stopper 30 bzw. Gegenstopper 31 können an beliebigen Stellen des Spiegelkopfes bzw. des Spiegelfußes montiert sein, auch eine radiale Anordnung in Bezug auf eine Schwenkachse 7 ist möglich.

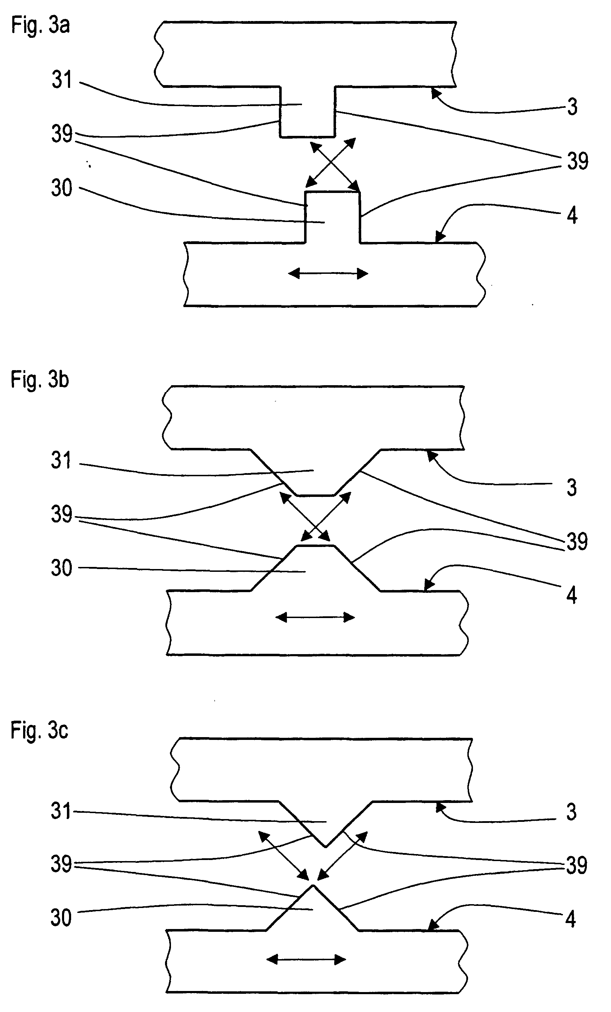

Fig. 3a zeigt die Stoppereinrichtung nach Fig. 1, mit dem Stopper 30 und dem Gegenstopper 31. Hier sind die Stopper 30 und Gegenstopper 31 rechteckfömig geformt. Weil die Rastmittel und die Anschlagmittel zwischen dem Zahnrad 14 und dem Spiegelfuß 3 bzw. zwischen Spiegelkopf 4 und Spiegelfuß 3 geneigt sind, vollführt der Spiegelkopf eine dem Neigungswinkel entsprechende Bewegung. Da die Stopper 30 und Gegenstopper 31 nicht entsprechend geneigt sind, muss eine relativ große Differenz zwischen der Stopp-Position und der Fahrposition in Kauf genommen werden. Nur dann wird eine Klemmung vermieden.

Fig. 3b zeigt eine erste Variante der Stoppereinrichtunng nach Fig. 1, wobei die Differenz zwischen der Stopp-Position und der Fahrposition gegenüber Fig. 3a zumindest verringert ist. Hier sind die Stopper-Flächen 39 entsprechend den Neigungswinkeln der Anschlagmittel und der Rastmittel geneigt. Hierdurch kann eine Verklemmung nur noch dann auftreten, wenn der Spiegel bei einem äußeren Schlag nicht in der Fahrposition stand.

Eine zweite Variante der Stoppeeinrichtung nach Fig. 1 ist durch die spitz zulaufende Form der Stopper 30 und der Gegenstopper 31 in Fig 3c gegeben.

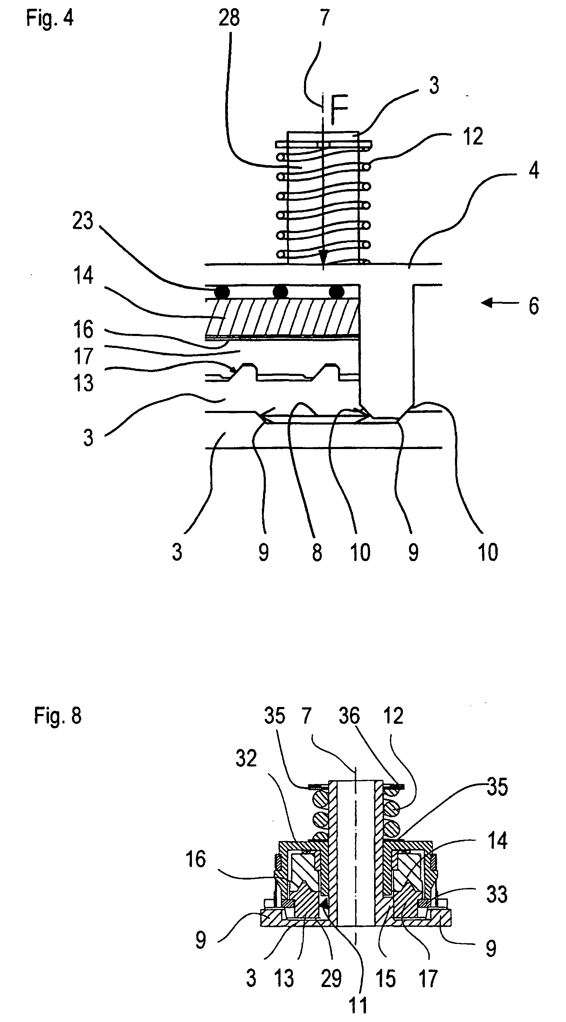

Fig. 4 zeigt eine Prinzipskizze einer bevorzugten Weiterbildung der Rasteinrichtung des Antriebs in einer ersten Stellung (hier der Einfachheit halber ohne Stoppereinrichtung), mit dem Spiegelfuß 3, dem Spiegelkopf 4, einem Rastring 17, dem Zahnrad 14 und einer Druckfeder 12, die eine Kraft F auf die um die Schwenkachse 7 aufeinander angeordneten Bauteile (3, 17, 14, 4) ausübt. Der Rastring 17 ist dabei über Rastmittel 13 mit dem Spiegelfuß 3 formschlüssig verbunden. Der Spiegelkopf 4 liegt über die Anschlagmittel 9 und Gegenanschlagmittel 10 am Spiegelfuß 3 an.

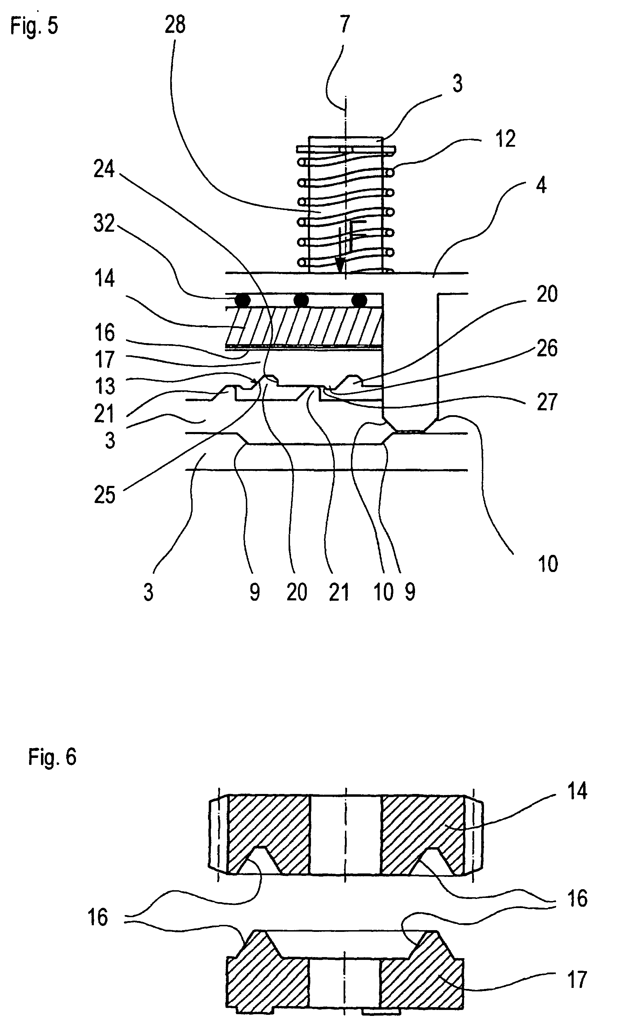

Fig. 5 zeigt eine Prinzipskizze des Antriebes 6 nach Fig. 4 (der Einfachheit halber ohne Stoppereinrichtung) in einer zweiten Stellung in der der Rastring 17 aus den Rastmitteln 13 ausgerastet und der Spiegelkopf 4 gegenüber dem Spiegelfuß 3 angehobenen ist. Die Rastmittel 13 bestehen aus Rastnocken 21 und Rastausnehmungen 20. Die Rastausnehmungen 20 sind mit unterschiedlichen Seitenflächen versehen, wobei die eine Seite rechtwinklig oder annähernd rechtwinklig zur Verstellrichtung ausgerichtet ist und die andere Seite zur Verstellrichtung geneigt ist, so dass ein Ausrasten bei Einwirkung einer hinreichend großen Kraft möglich ist. An diese zweite Fläche schließt eine vorspringende Anformung 26 an, deren Breite in Schwenkrichtung gering ist und die auf der der Rastausnehmung 20 gegenüberliegenden Seite eine zur Verstellrichtung geneigte Fläche 27 aufweist, deren Neigung so gewählt ist, dass der Antrieb durch Verdrehen des Rastrings 17 auf dem Spiegelfuß 3 nicht in der Lage ist diese geneigte Fläche 27 gegen die Kraft der Druckfeder 12 zu überwinden. Demgegenüber ist es jedoch möglich die geneigte Fläche 27 durch eine von außen auf den Spiegelkopf 4 einwirkende Kraft zu überwinden. Die vorspringende Anformung 26 dient als Hinderungsmittel gegen eine Fehlbedienung, die dazu führen könnte, dass die Druckfeder 12 keine Kraft mehr auf eine Reibfläche 16 zwischen dem Zahnrad 14 und dem Rastring 17 ausüben würde. In so einer Situation wäre der Rückblickspiegel motorisch nicht mehr antreibbar.

Fig. 6 zeigt die Reibfläche 16 als Ringkonus zwischen dem Zahnrad 14 und dem Rastring 17 angeordnet (nach Fig. 4). Durch Ändern des Neigungswinkels des Ringkonus kann die Reibkraft auf den gewünschten Wert eingestellt werden.

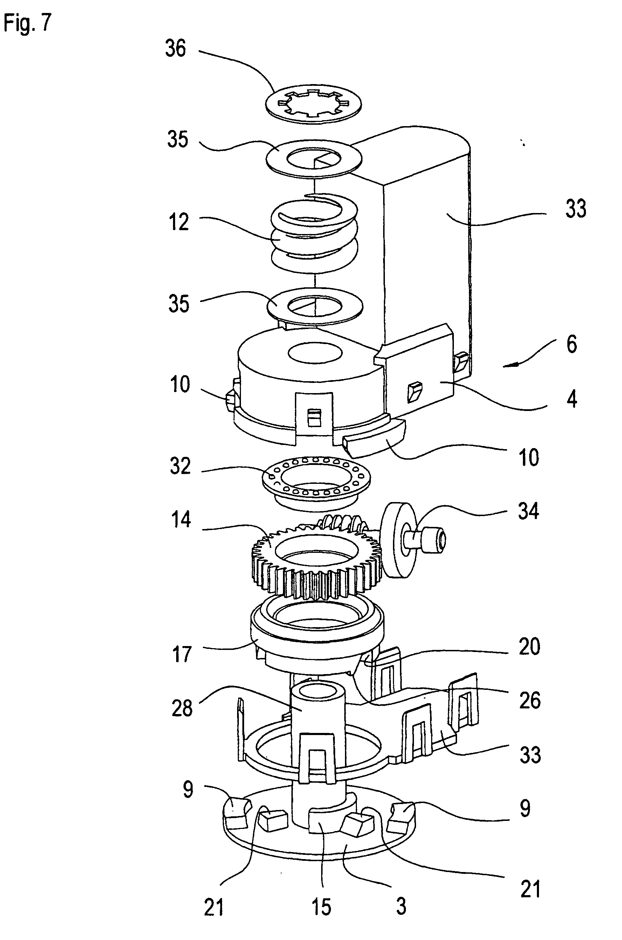

Fig. 7 zeigt eine Explosionsdarstellung des Antriebes nach Fig. 4 (hier der Einfachheit halber ohne Stoppereinrichtung) mit dem Spiegelfuß 3, den Anschlägen 9, den Rastnocken 21, dem Gelenkrohr 28, einem Klappwegbegrenzer 15, einem Antriebsgehäuse 33, dem Rastring 17, dem Zahnrad 14, einem Untersetzungsgetriebe 34, das hier aus einem zweistufigen Schneckengetriebe besteht und von einem nicht dargestellten Elektrokleinstmotor antreibbar ist, einem Lager 32, dem Spiegelkopf 4, wobei mit "Spiegelkopf" diejenigen Teile gemeint sind, die beim Schwenken des Spiegels mitbewegt werden, den Gegenanschlagmitteln 10, Scheiben 35, der Druckfeder 12 und der Zahnscheibe 36.

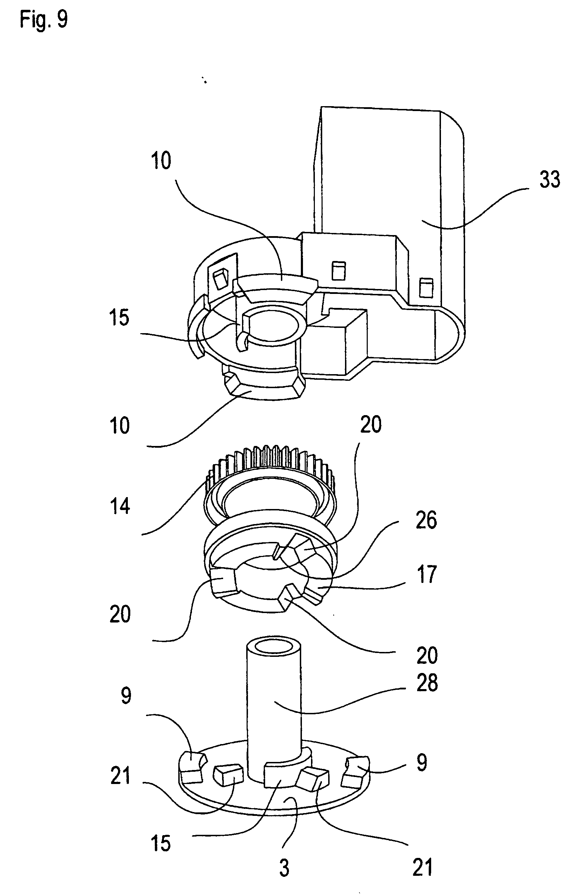

Eine Schnittansicht des Antriebes im Bereich der Schwenkachse 7 zeigt Fig. 8 mit dem Spiegelfuß 3, dem Anschlagmittel 9, den Rastmitteln 13, dem Rastring 17 mit der Reibfläche 16, dem Antriebsgehäuse 33, dem Zahnrad 14, dem Lager 32, der Druckfeder 12, den Scheiben 35 und der Zahnscheibe 36. Zwischen dem Rastring 17 und dem Spiegelfuß 3 ist ein Luftspalt 29 zu erkennen, der eine definierte Auflage der Rastausnehmungen 20 des Rastrings 17 auf den Rastnocken 21 des Spiegelfußes gewährleistet. Die Druckfeder 12 stützt sich einerseits über die eine Scheibe 35 und die Zahnscheibe 36 am Gelenkrohr 28 und damit am Spiegelfuß 3 ab und beaufschlagt andererseits über die zweite Scheibe 35 den Spiegelkopf 4, das Lager 32, das Zahnrad 14 und der Rastring 17 und sorgt damit für eine definierte Reibkraft der Reibfläche 16 und einen sicheren Halt des Rastrings 17 am Spiegelfuß 3.

Fig. 9 zeigt eine weitere etwas vereinfachte Explosiondarstellung nach Fig. 4 (hier der Einfachheit halber ohne Stopper-Einrichtung), aus der das Zusammenspiel des Klappwegbegrenzers 15 am Spiegelkopf 4 und am Spiegelfuß 3 deutlich wird.

Fig. 10 zeigt einen Außenrückblickspiegel 1 für ein Kraftfahrzeug 2 mit einem Spiegelglas 5, dem Spiegelfuß 3, wobei damit alle Teile gemeint sind, die fest mit der Karosserie verbunden sind und dem Antrieb 6.

Die möglichen Stellungen des Außenrückblickspiegels sind in Fig. 11 dargestellt. Motorisch wird der Außenrückblickspiegel im Normalbetrieb nur zwischen der Fahrposition F und der Parkstellung P verstellt. Kommt es durch einen von außen auf den Rückblickspiegel einwirkenden Schlag zu einem erzwungenen Abklappen des Außenrückblickspiegels in Fahrtrichtung (Position K), dann ist sowohl eine Rückstellung von Hand, als auch eine motorische Rückstellung möglich. Bei dem genannten Fall wird der Spiegelkopf gegenüber dem Spiegelfuß angehoben und die Rastverbindung zwischen dem Rastring und dem Spiegelfuß aufgehoben. Beim motorischen Zurückstellen ist gewöhnlich ein Synchronisationsvorgang notwendig, um die Rastmittel des Rastrings und des Spiegelfußes wieder in Übereinstimmung zu bringen. Bei einem erzwungenen Abklappen entgegen der Fahrtrichtung (Richtung P) wird der Spiegelkopf 4 nicht angehoben, weil die Flanken der Rastmittel in diese Richtung zu steil sind um überwunden werden zu können. Damit keine Zerstörung des Antriebes eintritt, ist eine Reibkupplung zwischen dem Rastring und dem Zahnrad vorgesehen, deren Reibkraft nur von einer von außen einwirkenden Kraft überwunden werden kann. Bei diesem zweiten möglichen Fall des erzwungenen Abklappens ist keine Synchronisation erforderlich. Der Spiegel muss lediglich in die Fahrposition zurückgestellt werden. Die Synchronisation ist vor allem deshalb unerwünscht, weil der Bewegungsablauf für den Fahrer unverständlich sein könnte und als Fehler interpretierbar ist. Bei einem nach vorne in Fahrtrichtung (K) abgeklappten Außenrückblickspiegel müsste der Außenrückblickspiegel ohne Stopper-Einrichtung zunächst bis zum Klappwegbegrenzer in der nach hinten abgeklappten Stellung gefahren werden, weil vorher kein Widerstand für den Außenrückblickspiegel vorhanden wäre, der eine Relativbewegung des Rastrings zum Spiegelfuß 3 ermöglichen würde. In der Anschlagstellung verharrt der Spiegelkopf dann bis die Übereinstimmung der Rastmittel erfolgt ist und erst dann kann der Spiegelkopf 4 wieder in die Fahrposition zurückbewegt werden.

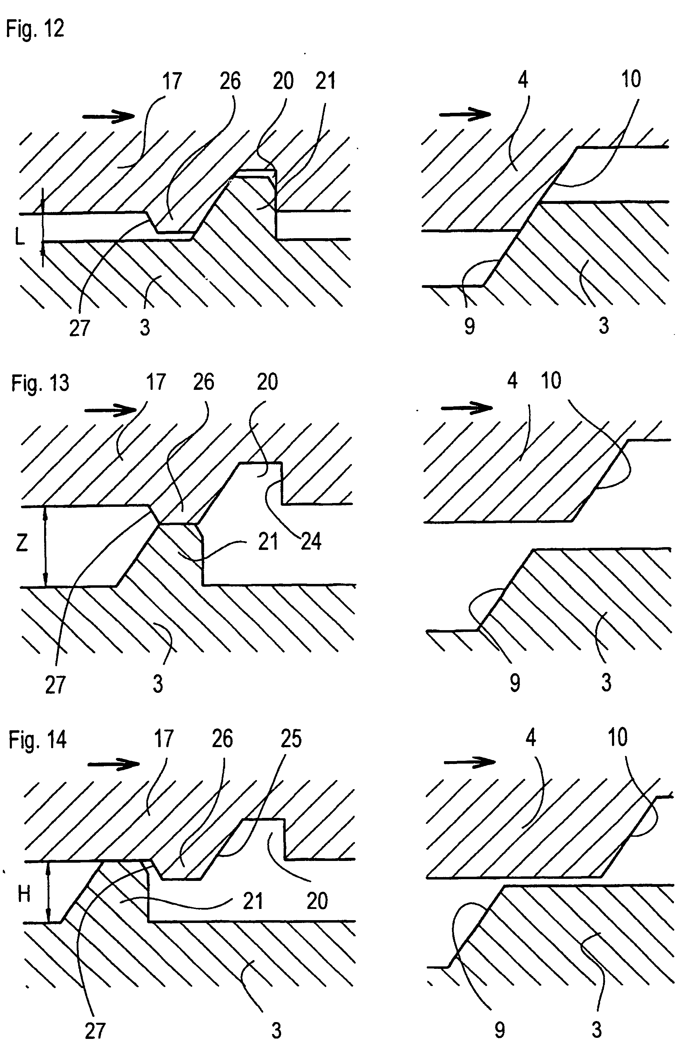

Die Fig. 12, 13 und 14 zeigen die wesentlichen möglichen Stellungen des Rastrings 17 zum Spiegelfuß 3 und daneben die dazugehörigen Stellungen zwischen Spigelfuß 3 und Spiegelkopf 4 des Außenrückblickspiegels nach Fig. 4. In Fig. 12 ist die eingerastete Stellung dargestellt, in der der Abstand zwischen dem Rastring 17 und dem Spiegelfuß 3 oder dem Spiegelkopf 4 und dem Spiegelfuß 3 am geringsten ist (L). In Fig. 13 wird eine Zwischenstellung gezeigt, die nur in der erzwungenen Abklappbewegung in Fahrtrichtung erreicht und sofort wieder verlassen wird. In dieser Stellung erreicht der Abstand zwischen Spiegelfuß 3 und dem Rastring 17 bzw. dem Spigelkopf 4 seinen größten Wert (Z). Die unmittelbar danach eingenommene Stellung wird durch Fig. 14 dargestellt. Der Abstand zwischen Spiegelfuß 3 und dem Rastring 17 bzw. dem Spiegelkopf 4 liegt hierbei in einem mittleren Bereich (H) zwischen den Stellungen (L) und (Z). Die vorspringende Anformung 26 verhindert bei einer Fehlbedienung, bei der der Außenrückblickspiegel motorisch weiter in Fahrtrichtung angetrieben wird, dass eine Synchronisation stattfinden kann, weil diese zu einem Aufsitzen des Spiegelkopfes 4 auf den Spiegelfuß 3 führen würde und damit zu einem Auskuppeln der Reibkupplung. Motorisch wäre der Außenrückblickpiegel dann nicht mehr zurückstellbar. Die vorspringende Anformung 26 bewirkt also ein Blockieren des Antriebs. Dies kann elektronisch oder von der Bedienperson erkannt und der Antrieb somit umgepolt werden. Damit der Außenrückblickspiegel auch von Hand in seine Ausgangslage zurück gebracht werden kann, ist die vorspringende Anformung 26 angeschrägt.

### Bezugszeichenliste

- 1: Außenrückblickspiegel
- 2: Kraftfahrzeug
- 3: Spiegelfuß
- 4: Spiegelkopf
- 5: Spiegelglas
- 6: Antrieb
- 7: Schwenkachse
- 8: Schwenkweg
- 9: Anschlagmittel
- 10: Gegenanschlagmittel
- 11: Schwenkgelenk
- 12: Druckfeder
- 13: Rastmittel
- 14: Zahnrad
- 15: Klappwegbegrenzer
- 16: Reibfläche
- 17: Rastring
- 20: Rastausnehmungen
- 21: Rastnocken
- 24: geneigte Flanke
- 25: steile Flanke
- 26: vorspringende Anformung
- 27: geneigte Fläche
- 28: Gelenkrohr
- 29: Luftspalt zwischen Spiegelfuß und Rastring
- 30: Stopper
- 31: Gegenstopper
- 32: Kugellager
- 33: Gehäuse
- 34: Untersetzungsgetriebe
- 35: Scheibe
- 36: Zahnscheibe
- 37: Verzahnung
- 38: topfförmige Scheibe
- 39: Stopperflächen

## Patentansprüche

1. Außenrückblickspiegel (1) für ein Kraftfahrzeug (2), mit einem am Kraftfahrzeug (2) zu befestigenden Spiegelfuß (3) und einem Spiegelkopf (4), wobei der ein Spiegelglas (5) tragende, mittels eines Antriebes (6) relativ zum Spiegelfuß (3) um eine Schwenkachse (7), zwischen einer Fahrposition (F) und einer Parkstellung (P) verschwenkbare, am Spiegelfuß (3) mit einem Schwenkgelenk (11) befestigte Spiegelkopf (4) unter einer von außen auf den Spiegelkopf (4) einwirkenden Kraft aus einer Gebrauchslage (F bis P) an das Kraftfahrzeug (2) anklappbar ist, wobei Rastmittel (13) zwischen spiegelfuß- und spiegelkopffesten Teilen ausrastbar sind, um Beschädigungen des Antriebes zu verhindern, **dadurch gekennzeichnet, dass** am Spiegelkopf (4) ein Stopper (30) und am Spiegelfuß (3) ein Gegenstopper (31) vorgesehen ist, der Stopper (30) in der Fahrposition (F) oder in der Nähe der Fahrposition (F) in Schwenkrichtung am Gegenstopper (31) anschlagbar ist, wenn die Rastmittel (13) sich in einem ausgerasteten Zustand befinden, und der Stopper (30) in keiner zwischen der Fahrposition (F) und der Parkstellung (P) befindlichen Schwenkstellung mit dem Gegenstopper (31) anschlagbar ist, wenn die Rastmittel (13) sich im eingerasteten Zustand befinden.

2. Außenrückblickspiegel nach Anspruch 1, **dadurch gekennzeichnet, dass** sich die Rastmittel (13) am Spiegelfuß (3) und an einem zum Antrieb (6) gehörenden Zahnrad (14) befinden.

3. Außenrückblickspiegel nach Anspruch 1 oder 2, **dadurch gekennzeichnet, dass** die Rastmittel (13) in Form von Rastnocken (21) und Rastausnehmungen (20) ausgebildet sind, deren Flanken (24, 25) geneigt sind.

4. Außenrückblickspiegel nach Anspruch 2 oder 3, **dadurch gekennzeichnet, dass** das Zahnrad (14) in der Gebrauchslage (F bis P) unter der Kraftwirkung wenigstens einer Druckfeder (12) über die ausrastbaren Rastmittel (13) in Schwenkrichtung mit dem Spiegelfuß (3) verbunden ist, zwischen Spiegelkopf (4) und Spiegelfuß (3) eingespannt ist, koaxial zur Schwenkachse (7) angeordnet ist und mit dem Antrieb (6) getrieblich in Eingriff steht.

5. Außenrückblickspiegel nach Anspruch 2, 3 oder 4, **dadurch gekennzeichnet, dass** das Zahnrad (14) und der Spiegelkopf (4) im ausgerasteten Zustand in Bezug auf den Spiegelfuß (3) angehoben sind.

6. Außenrückblickspiegel nach Anspruch 1, 2, 3, 4 oder 5, **dadurch gekennzeichnet, dass** der Stopper (30) am Spiegelkopf (4) dem Gegenstopper (31) am Spiegelfuß (3) in der Fahrposition in Axialrichtung gegenüber liegt.

7. Außenrückblickspiegel nach Anspruch 1, 2, 3, 4, 5 oder 6, **dadurch gekennzeichnet, dass** der Stopper (30) und der Gegenstopper (31) geneigte Stopperflächen (40) aufweist.

8. Außenrückblickspiegel nach Anspruch 7, **dadurch gekennzeichnet, dass** der Neigungswinkel der Stopperflächen (40) zumindest annähernd dem Neigungswinkel der Rastausnehmungen(20) und Rastnocken (21) der Rastmittel (13) entspricht.

9. Außenrückblickspiegel nach Anspruch 1, 2, 3, 4, 5, 6, 7 oder 8 **dadurch gekennzeichnet, dass** im eingerasteten Zustand der Rastmittel (13) der kleinste Abstand des Stoppers (30) vom Gegenstopper (31) in Axialrichtung kleiner ist als der maximale Hub, den der Spiegelkopf (4) gegenüber dem Spiegelfuß (3) beim Ausrasten ausführt.

10. Außenrückblickspiegel nach Anspruch 1, 2, 3, 4, 5, 6, 7, 8 oder 9 **dadurch gekennzeichnet, dass** im eingerasteten Zustand der Rastmittel (13) der kleinste Abstand des Stoppers (30) vom Gegenstopper (31) in Axialrichtung größer ist als die Breite des Stoppers (30) in Schwenkrichtung an der dem Gegenstopper (31) gegenüberliegenden Seite.

11. Außenrückblickspiegel nach Anspruch 1, 2, 3, 4, 5, 6, 7, 8, 9 oder 10, **dadurch gekennzeichnet, dass** im eingerasteten Zustand der Rastmittel (13) der kleinste Abstand des Stoppers (30) vom Gegenstopper (31) in Axialrichtung größer ist als die Breite des Gegenstoppers (31) in Schwenkrichtung an der dem Stopper (30) gegenüberliegenden Seite.

12. Außenrückblickspiegel nach zumindest einem der vorhergehenden Ansprüche, **dadurch gekennzeichnet, dass** der Stopper (30) und der Gegenstopper (31) spitz zulaufend ausgebildet sind.

13. Außenrückblickspiegel nach zumindest einem der vorhergehenden Ansprüche, **dadurch gekennzeichnet, dass** der Stopper (30) und/oder der Gegenstopper (31) mit Sollbruchstellen versehen ist/sind.

14. Außenrückblickspiegel nach zumindest einem der vorhergehenden Ansprüche, **dadurch gekennzeichnet, dass** der Stopper (30) und/oder der Gegenstopper (31) nachgiebig ausgebildet ist/sind.

15. Außenrückblickspiegel nach zumindest einem der vorhergehenden Ansprüche, **dadurch gekennzeichnet, dass** mehrere, vorzugsweise zwei, Stopper (30) und Gegenstopper (31) vorgesehen sind.

16. Außenrückblickspiegel nach zumindest einem der vorhergehenden Ansprüche, **dadurch gekennzeichnet, dass** der Gegenstopper (31) am Spiegelfuß (3) durch eine die Druckfeder (12) niederhaltende Scheibe (38) gebildet wird, die an einem ein Teil des Schwenkgelenks (11) bildenden Gelenkrohr (28) verdrehgesichert befestigt ist.

17. Außenrückblickspiegel nach Anspruch 16, **dadurch gekennzeichnet, dass** die federniederhaltende Scheibe (38) topfförmig ausgebildet ist, wobei die Gegenstopper (31) an dessen Topfrand angeordnet sind.

18. Außenrückblickspiegel nach zumindest einem der vorhergehenden Ansprüche, **dadurch gekennzeichnet, dass** die Stopper (30) auf einem Antriebsgehäuse (33) koaxial zur Schwenkachse um die Druckfeder (12) herum angeordnet sind.

19. Außenrückblickspiegel nach zumindest einem der vorhergehenden Ansprüche, **dadurch gekennzeichnet, dass** der Spiegelfuß (3) einen Schwenkweg (8) begrenzende und damit die Fahr- bzw. Parkstellung (F, P) bestimmende Anschlagmittel (9) und der Spiegelkopf (4) entsprechende Gegenanschlagmittel (10) aufweist.

20. Außenrückblickspiegel nach zumindest einem der vorhergehenden Ansprüche, **dadurch gekennzeichnet, dass** mindestens ein Anschlagmittel (9) und/oder Gegenanschlagmittel (10) in Bezug auf die Schwenkrichtung geneigt ist.

21. Außenrückblickspiegel nach zumindest einem der vorhergehenden Ansprüche, **dadurch gekennzeichnet, dass** das Zahnrad (14) über zumindest eine Reibfläche (16) mit einem mit den Rastmitteln (13) versehenen, im wesentlichen ringförmigen und koaxial zur Schwenkachse (7) angeordneten Rastring (17) flächig verbunden ist, wobei der Rastring (17) zwischen dem Zahnrad (14) und dem Spiegelfuß (3) angeordnet ist, die Rastmittel (13) am Rastring (17) und am Spiegelfuß (3) so geformt sind, dass das Ausrastmoment bei Einwirkung einer in Fahrtrichtung gerichteten äußeren Kraft (F_{IF}) wesentlich kleiner ist als bei Einwirkung einer gegen die Fahrtrichtung gerichteten äußeren Kraft (F_{GF}), das Reibmoment zwischen dem Zahnrad (14) und dem Rastring (17) größer ist als das Ausrastmoment zwischen dem Rastring (17) und dem Spiegelfuß (3) bei Einwirkung einer in Fahrtrichtung gerichteten äußeren Kraft (F_{IF}), aber kleiner als das Ausrastmoment zwischen Rastring (17) und dem Spiegelfuß (3) bei Einwirkung einer gegen die Fahrtrichtung gerichteten äußeren Kraft (F_{GF}).

22. Außenrückblickspiegel nach Anspruch 3, **dadurch gekennzeichnet, dass** die Rastmittel (13) in Form von Rastnocken (21) und Rastausnehmungen (20) ausgebildet sind, deren Flanken (24, 25) unterschiedlich geneigt sind.

23. Außenrückblickspiegel nach zumindest einem der vorhergehenden Ansprüche, **dadurch gekennzeichnet, dass** der Spiegelkopf (4) in Bezug auf den Spiegelfuß (3) mehrere Höhenniveaus einnehmen kann, wobei auf allen Höhenniveaus und in allen Drehwinkelstellungen des Spiegelkopfs (4) mindestens Reibschluß zwischen dem Zahnrad (14) und dem Rastring (17) besteht, der durch die Druckfeder (12) aufrechterhalten wird.

24. Außenrückblickspiegel nach zumindest einem der vorhergehenden Ansprüche, **dadurch gekennzeichnet, dass** der Spiegelkopf (4) in bezug auf den Spiegelfuß (3) zwei Höhenniveaus (H, L) einnehmen kann, wobei bei der Überführung des Spiegelkopfes (4) von einem niedrigen Höhenniveau (L) auf ein mittleres Höhenniveau (H) ein drittes Höhenniveau (Z) überwunden werden muss.

25. Außenrückblickspiegel nach Anspruch 24, **dadurch gekennzeichnet, dass** das dritte Höhenniveau (Z) motorisch weder vom niedrigen Höhenniveau (L) noch vom mittleren Höhenniveau (H) aus erreichbar ist.

26. Außenrückblickspiegel nach Anspruch 24 oder 25, **dadurch gekennzeichnet, dass** das niedrige Höhenniveau (L) nur zwischen der Fahrposition (F) und der Parkposition (P) möglich ist.

27. Außenrückblickspiegel nach Anspruch 24, 25 oder 26, **dadurch gekennzeichnet, dass** das mittlere Höhenniveau (H) nur in nach vorne in Fahrtrichtung abgeklappten Spiegelpositionen (K) möglich ist.

28. Außenrückblickspiegel nach Anspruch 24, 25, 26 oder 27, **dadurch gekennzeichnet, dass** das dritte Höhenniveau (Z) nur zwischen der Fahrposition (F) und einer nach vorne in Fahrtrichtung abgeklappten Spiegelposition (K) möglich ist.

29. Außenrückblickspiegel nach Anspruch 14, 25, 26, 27 oder 28, **dadurch gekennzeichnet, dass** das dritte Höhenniveau (Z) nur kurzzeitig während der Einwirkung einer in Fahrtrichtung auf den Spiegelkopf (4) einwirkenden äußeren Kraft erreicht und anschließend aufgrund der Dynamik wieder verlassen wird, wonach das mittlere Höhenniveau (H) eingenommen wird.

30. Außenrückblickspiegel nach Anspruch 24, 25, 26, 27, 28 oder 29, **dadurch gekennzeichnet, dass** der Übergang zwischen dem mittleren Höhenniveau (H) und dem dritten Höhenniveau (Z) in Form einer vorspringenden Anformung (26) ausgebildet ist.

31. Außenrückblickspiegel nach Anspruch 30, **dadurch gekennzeichnet, dass** die Anformung (26) als in Bezug auf die Schwenkebene geneigte Fläche (27) ausgebildet ist.

32. Außenrückblickspiegel nach Anspruch 31, **dadurch gekennzeichnet, dass** die Neigung der Fläche (27) so gewählt ist, dass die Anformung (26) motorisch nicht überwindbar ist.

33. Außenrückblickspiegel nach Anspruch 31 oder 32, **dadurch gekennzeichnet, dass** die Neigung der Fläche (27) so gewählt ist, dass die Anformung (26) von einer äußeren auf den Spiegelkopf (4) einwirkenden Kraft überwindbar ist, wobei der Spiegelkopf (4) gegen die Kraft der Druckfeder (12) kurzzeitig auf das dritte Niveau (Z) angehoben und anschließend auf das niedrige Niveau (L) abgesenkt wird.

34. Außenrückblickspiegel nach zumindest einem der vorhergehenden Ansprüche, **dadurch gekennzeichnet, dass** die Reibfläche (16) zwischen dem Zahnrad (14) und dem Rastring (17) konusförmig ausgebildet ist.

35. Außenrückblickspiegel nach zumindest einem der vorhergehenden Ansprüche, **dadurch gekennzeichnet, dass** die eingerasteten Rastmittel (13) bei einer in Fahrtrichtung auf den Spiegelkopf (4) einwirkenden äußeren Kraft (F_{IF})und bei einer entgegen der Fahrtrichtung auf den Spiegelkopf einwirkenden äußeren Kraft (F_{GF}) ausrastbar sind und der Spiegelkopf (4) in Bezug auf den Spiegelfuß (3) dadurch abhebbar ist.

## Claims

1. An exterior rearview mirror (1) for a motor vehicle (2), comprising a mirror foot (3), to be fixed to the motor vehicle (2), and a mirror head (4), wherein the mirror head (4), which carries a mirror glass (5), is pivotable relative to the mirror foot (3) between a driving position (F) and a parking position (P) about a pivoting axis (7) by means of a drive (6) and is fixed to the mirror foot (3) by means of a swivel joint (11), is tiltable towards the motor vehicle (2) from a position of use (F to P) under a force acting externally on the mirror head (4), wherein locking means (13) between parts fixed to the mirror foot and the mirror head are disengageable in order to prevent damage to the drive, **characterised in that** a stopper (30) is provided on the mirror head (4) and a counterstopper (31) is provided on the mirror foot (3), the stopper (30) can strike the counterstopper (31) in the pivoting direction in the driving position (F) or in proximity to the driving position (F) when the locking means (13) are in a disengaged state, and the stopper (30) cannot strike the counterstopper (31) in any pivoted position between the driving position (F) and the parking position (P) when the locking means (13) are in the engaged state.

2. An exterior rearview mirror according to claim 1, **characterised in that** the locking means (13) are located on the mirror foot (3) and on a gearwheel (14) forming part of the drive (6).

3. An exterior rearview mirror according to claim 1 or 2, **characterised in that** the locking means (13) are in the form of locking projections (21) and locking recesses (20), the flanks (24, 25) of which are inclined.

4. An exterior rearview mirror according to claim 2 or 3, **characterised in that** the gearwheel (14) is connected, in the position of use (F to P), to the mirror foot (3) in the pivoting direction via the disengageable locking means (13) by the action of at least one compression spring (12), is clamped between the mirror head (4) and the mirror foot (3), is arranged coaxially with the pivoting axis (7) and is in transmissive engagement with the drive (6).

5. An exterior rearview mirror according to claim 2, 3 or 4, **characterised in that** the gearwheel (14) and the mirror head (4) are raised in relation to the mirror foot (3) in the disengaged state.

6. An exterior rearview mirror according to claim 1, 2, 3, 4 or 5, **characterised in that** the stopper (30) on the mirror head (4) lies opposite the counterstopper (31) on the mirror foot (3) in the axial direction in the driving position.

7. An exterior rearview mirror according to claim 1, 2, 3, 4, 5 or 6, **characterised in that** the stopper (30) and the counterstopper (31) have inclined stopper surfaces (40 [*sic* - 39]).

8. An exterior rearview mirror according to claim 7, **characterised in that** the angle of inclination of the stopper surfaces (40 [*sic* - 39]) corresponds at least approximately to the angle of inclination of the locking recesses (20) and locking projections (21) of the locking means (13).

9. An exterior rearview mirror according to claim 1, 2, 3, 4, 5, 6, 7 or 8, **characterised in that**, when the locking means (13) are in the engaged state, the smallest distance of the stopper (30) from the counterstopper (31) in the axial direction is smaller than the maximum lift executed by the mirror head (4) in relation to the mirror foot (3) during disengagement.

10. An exterior rearview mirror according to claim 1, 2, 3, 4, 5, 6, 7, 8 or 9, **characterised in that**, when the locking means (13) are in the engaged state, the smallest distance of the stopper (30) from the counterstopper (31) in the axial direction is greater than the width of the stopper (30) in the pivoting direction on the side opposite the counterstopper (31).

11. An exterior rearview mirror according to claim 1, 2, 3, 4, 5, 6, 7, 8, 9 or 10, **characterised in that**, when the locking means (13) are in the engaged state, the smallest distance of the stopper (30) from the counterstopper (31) in the axial direction is greater than the width of the counterstopper (31) in the pivoting direction on the side opposite the stopper (30).

12. An exterior rearview mirror according to at least one of the preceding claims, **characterised in that** the stopper (30) and the counterstopper (31) taper to a point.

13. An exterior rearview mirror according to at least one of the preceding claims, **characterised in that** the stopper (30) and/or the counterstopper (31) is/are provided with predetermined breaking points.

14. An exterior rearview mirror according to at least one of the preceding claims, **characterised in that** the stopper (30) and/or the counterstopper (31) is/are resiliently formed.

15. An exterior rearview mirror according to at least one of the preceding claims, **characterised in that** a plurality of, preferably two, stoppers (30) and counterstoppers (31) are provided.

16. An exterior rearview mirror according to at least one of the preceding claims, **characterised in that** the counterstopper (31) on the mirror foot (3) is formed by a ring (38) which holds down the compression spring (12) and is secured in a rotationally fixed manner to a pivot tube (28) forming part of the swivel joint (11).

17. An exterior rearview mirror according to claim 16, **characterised in that** the ring (38) holding down the spring is pot-shaped and the counterstoppers (31) are arranged on the pot edge.

18. An exterior rearview mirror according to at least one of the preceding claims, **characterised in that** the stoppers (30) are arranged around the compression spring (12) on a drive housing (33) coaxially with the pivoting axis.

19. An exterior rearview mirror according to at least one of the preceding claims, **characterised in that** the mirror foot (3) has stop means (9) delimiting a pivoting path (8) and thereby defining the driving and parking positions (F, P), and the mirror head (4) has corresponding counterstop means (10).

20. An exterior rearview mirror according to at least one of the preceding claims, **characterised in that** at least one stop means (9) and/or counterstop means (10) is inclined relative to the pivoting direction.

21. An exterior rearview mirror according to at least one of the preceding claims, **characterised in that** the gearwheel (14) is connected in a planar manner via at least one friction surface (16) to a substantially annular locking ring (17) provided with the locking means (13) and arranged coaxially with the pivoting axis (7), wherein the locking ring (17) is arranged between the gearwheel (14) and the mirror foot (3), the locking means (13) are formed on the locking ring (17) and the mirror foot (3) so that the disengagement moment under the action of an external force (F_{IF}) applied in the direction of travel is substantially smaller than under the action of an external force (F_{GF}) applied counter to the direction of travel, the friction moment between the gearwheel (14) and the locking ring (17) is greater than the disengagement moment between the locking ring (17) and the mirror foot (3) under the action of an external force (F_{IF}) applied in the direction of travel, but smaller than the disengagement moment between the locking ring (17) and the mirror foot (3) under the action of an external force (F_{GF}) applied counter to the direction of travel.

22. An exterior rearview mirror according to claim 3, **characterised in that** the locking means (13) are in the form of locking projections (21) and locking recesses (20), the flanks (24, 25) of which are differently inclined.

23. An exterior rearview mirror according to at least one of the preceding claims, **characterised in that** the mirror head (4) can adopt a plurality of heights in relation to the mirror foot (3), wherein, at all heights and in all rotational positions of the mirror head (4), a frictional connection exists at least between the gearwheel (14) and the locking ring (17) and is maintained by the compression spring (12).

24. An exterior rearview mirror according to at least one of the preceding claims, **characterised in that** the mirror head (4) can adopt two heights (H, L) in relation to the mirror foot (3), wherein a third height (Z) has to be surmounted when the mirror head (4) is shifted from a low height (L) to a middle height (H).

25. An exterior rearview mirror according to claim 24, **characterised in that** the third height (Z) cannot be attained by motor-driven means either starting from the low height (L) or starting from the middle height (H).

26. An exterior rearview mirror according to claim 24 or 25, **characterised in that** the low height (L) is only possible between the driving position (F) and the parking position (P).

27. An exterior rearview mirror according to claim 24, 25 or 26, **characterised in that** the middle height (H) is only possible in mirror positions (K) in which the mirror is tilted forwards in the direction of travel.

28. An exterior rearview mirror according to claim 24, 25, 26 or 27, **characterised in that** the third height (Z) is only possible between the driving position (F) and a mirror position (K) in which the mirror is tilted forwards in the direction of travel.

29. An exterior rearview mirror according to claim 24, 25, 26, 27 or 28, **characterised in that** the third height (Z) is only momentarily attained under the action of an external force acting on the mirror head (4) in the direction of travel and is then left again owing to the dynamics, after which the middle height (H) is adopted.

30. An exterior rearview mirror according to claim 24, 25, 26, 27, 28 or 29, **characterised in that** the transition between the middle height (H) and the third height (Z) is in the form of a projecting formation (26).

31. An exterior rearview mirror according to claim 30, **characterised in that** the formation (26) is constructed as a surface (27) inclined relative to the pivoting plane.

32. An exterior rearview mirror according to claim 31, **characterised in that** the inclination of the surface (27) is selected so that the formation (26) cannot be surmounted by motor-driven means.

33. An exterior rearview mirror according to claim 31 or 32, **characterised in that** the inclination of the surface (27) is selected so that the formation (26) can be surmounted by an external force acting on the mirror head (4), wherein the mirror head (4) is briefly raised to the third height (Z) against the force of the compression spring (12) and then lowered to the low height (L).

34. An exterior rearview mirror according to at least one of the preceding claims, **characterised in that** the friction surface (16) between the gearwheel (14) and the locking ring (17) is conically formed.

35. An exterior rearview mirror according to at least one of the preceding claims, **characterised in that** the engaged locking means (13) are disengageable under an external force (F_{IF}) acting on the mirror head (4) in the direction of travel and under an external force (F_{GF}) acting on the mirror head counter to the direction of travel and the mirror head (4) is thereby raisable in relation to the mirror foot (3).

## Revendications

1. Rétroviseur extérieur (1) pour un véhicule (2), comprenant un pied de rétroviseur (3) à fixer sur le véhicule (2) et une tête de rétroviseur (4), ladite tête de rétroviseur (4), qui porte un verre de rétroviseur (5), fixée sur le pied de rétroviseur (3) par une articulation pivotante (11) et capable de pivoter au moyen d'un entraînement (6) par rapport au pied de rétroviseur (3) autour d'un axe de pivotement (7) entre une position de circulation (F) et une position de stationnement (P), est susceptible d'être rabattue sous une force agissant de l'extérieur sur la tête de rétroviseur (4) depuis une position d'utilisation (F à P) contre le véhicule (2), et des moyens d'enclenchement (13) entre des parties solidaires du pied de rétroviseur et des parties solidaires de la tête de rétroviseur sont susceptibles de se désenclencher pour éviter des endommagements de l'entraînement, **caractérisé en ce qu'**un arrêt (30) est prévu sur la tête de rétroviseur (4) et un contre-arrêt (31) est prévu sur le pied de rétroviseur (3), l'arrêt (30) étant susceptible de venir buter en direction de pivotement contre le contre-arrêt (31) dans la position de circulation (F) ou à proximité de la position de circulation (F) lorsque de les moyens d'enclenchement (13) se trouvent dans un état désenclenché, et l'arrêt (30) n'est susceptible de venir buter contre le contre-arrêt (31) dans aucune position de pivotement située entre la position de circulation (F) et la position de stationnement (P) quand les moyens d'enclenchement (13) se trouvent dans un état enclenché.

2. Rétroviseur extérieur selon la revendication 1, **caractérisé en ce que** les moyens d'enclenchement (13) sont situés sur le pied de rétroviseur (3) et sur une roue dentée (14) appartenant à l'entraînement (6).

3. Rétroviseur extérieur selon l'une ou l'autre des revendications 1 et 2, **caractérisé en ce que** les moyens d'enclenchement (13) sont réalisés sous la forme de cames d'enclenchement (21) et d'évidements d'enclenchement (20), dont les flancs (24, 25) sont inclinés.

4. Rétroviseur extérieur selon l'une ou l'autre des revendications 2 et 3, **caractérisé en ce que** la roue dentée (14) est reliée via les moyens d'enclenchement (13) susceptibles d'être désenclenchés au pied de rétroviseur (3) en direction de pivotement sous l'action de la force d'au moins un ressort de compression (12), est serrée dans la position d'utilisation (F à P) entre la tête de rétroviseur (4) et le pied de rétroviseur (3), est agencée coaxialement à l'axe de pivotement (7), et est en engagement mécanique avec l'entraînement (6).

5. Rétroviseur extérieur selon l'une des revendications 2, 3 ou 4, **caractérisé en ce que** la roue dentée (14) et la tête de rétroviseur (4) sont soulevées par rapport au pied de rétroviseur (3) dans la situation désenclenchée.

6. Rétroviseur extérieur selon l'une des revendications 1, 2, 3, 4 ou 5, **caractérisé en ce que** l'arrêt (30) sur la tête de rétroviseur (4) est situé à l'opposé du contre-arrêt (31) sur le pied de rétroviseur (3) en direction axiale dans la position de circulation.

7. Rétroviseur extérieur selon l'une des revendications 1, 2, 3, 4, 5 ou 6, **caractérisé en ce que** l'arrêt (30) et le contre-arrêt (31) présentent des surfaces d'arrêt (40) inclinées.

8. Rétroviseur extérieur selon la revendication 7, **caractérisé en ce que** l'angle d'inclinaison des surfaces d'arrêt (40) correspond au moins approximativement à l'angle d'inclinaison des évidements d'enclenchement (20) et des cames d'enclenchement (21) des moyens d'enclenchement (13).

9. Rétroviseur extérieur selon l'une des revendications 1, 2, 3, 4, 5, 6, 7 ou 8, **caractérisé en ce que**, dans la situation enclenchée des moyens d'enclenchement (13), la plus petite distance entre l'arrêt (30) et le contre-arrêt (31) en direction axiale est inférieure à la course maximale qu'exécute la tête de rétroviseur (4) par rapport au pied de rétroviseur (3) lors du désenclenchement.

10. Rétroviseur extérieur selon l'une des revendications 1, 2, 3, 4, 5, 6, 7, 8 ou 9, **caractérisé en ce que**, dans la situation enclenchée des moyens d'enclenchement (13), la plus petite distance entre l'arrêt (30) et le contre-arrêt (31) en direction axiale est supérieure à la largeur de l'arrêt (30) dans la direction de pivotement du côté opposé au contre-arrêt (31 ).

11. Rétroviseur extérieur selon l'une des revendications 1, 2, 3, 4, 5, 6, 7, 8, 9 ou 10, **caractérisé en ce que**, dans la situation enclenchée des moyens d'enclenchement (13), la plus petite distance entre l'arrêt (30) et le contre-arrêt (31) en direction axiale est supérieur à la largeur du contre-arrêt (31) dans la direction de pivotement du côté opposé à l'arrêt (30).

12. Rétroviseur extérieur selon l'une au moins des revendications précédentes, **caractérisé en ce que** l'arrêt (30) et le contre-arrêt (31) sont réalisés de manière à converger sous un angle aigu.

13. Rétroviseur extérieur selon l'une au moins des revendications précédentes, **caractérisé en ce que** l'arrêt (30) et/ou le contre-arrêt (31) est/sont pourvu(s) d'emplacements de rupture de consigne.

14. Rétroviseur extérieur selon l'une au moins des revendications précédentes, **caractérisé en ce que** l'arrêt (30) et/ou le contre-arrêt (31) est/sont réalisé(s) de manière à pouvoir céder.

15. Rétroviseur extérieur selon l'une au moins des revendications précédentes, **caractérisé en ce qu'**il est prévu plusieurs, de préférence deux, arrêts (30) et contre-arrêts (31).

16. Rétroviseur extérieur selon l'une au moins des revendications précédentes, **caractérisé en ce que** le contre-arrêt (31) sur le pied de rétroviseur (3) est formé par un disque (38) qui retient le ressort de compression (12) vers le bas, et qui est fixé sans possibilité de rotation sur un tube d'articulation (28) qui forme une partie de l'articulation de pivotement (11).

17. Rétroviseur extérieur selon la revendication 16, **caractérisé en ce que** le disque (38) qui retient le ressort de compression vers le bas est réalisé sous forme de godet, et **en ce que** les contre-arrêts (31) sont agencés sur la bordure du godet.

18. Rétroviseur extérieur selon l'une au moins des revendications précédentes, **caractérisé en ce que** les arrêts (30) sont agencés sur un boîtier d'entraînement (33) coaxialement à l'axe de pivotement tout autour du ressort de compression (12).

19. Rétroviseur extérieur selon l'une au moins des revendications précédentes, **caractérisé en ce que** le pied de rétroviseur (3) présente des organes de butée (9) et la tête de rétroviseur (4) présente des organes de butée antagonistes (10) correspondants, qui limitent un trajet de pivotement (8) et qui déterminent ainsi la position de circulation ou respectivement la position de stationnement (F, P).

20. Rétroviseur extérieur selon l'une au moins des revendications précédentes, **caractérisé en ce qu'**un organe de butée (9) et/ou un organe de butée antagoniste (10) au moins est incliné par rapport à la direction de pivotement.

21. Rétroviseur extérieur selon l'une au moins des revendications précédentes, **caractérisé en ce que** la roue dentée (14) est reliée à plat via au moins une surface de friction (16) à une bague d'enclenchement (17) qui est dotée des moyens d'enclenchement (13) et qui est agencée sensiblement sous forme annulaire et coaxialement à l'axe de pivotement (7), ladite bague d'enclenchement (17) étant agencée entre la roue dentée (14) et le pied de rétroviseur (3), lesdits moyens d'enclenchement (13) sur la bague d'enclenchement (17) et sur le pied de rétroviseur (3) étant ainsi formés que le moment de désenclenchement, lors de l'exercice d'une force extérieure (F_{IF}) dirigée dans la direction de circulation, est sensiblement plus faible que lors de l'exercice d'une force extérieure (F_{GF}) dirigée à l'opposé de la direction de circulation, le moment de friction entre la roue dentée (14) et la bague d'enclenchement (17) est supérieur au moment de désenclenchement entre la bague d'enclenchement (17) et le pied de rétroviseur (3) lors de l'exercice d'une force extérieure (F_{IF}) dirigée en direction de circulation, mais inférieure au moment de désenclenchement entre la bague d'enclenchement (17) et le pied de rétroviseur (3) lors de l'exercice d'une force extérieure (F_{GF}) dirigée à l'opposé de la direction de circulation.

22. Rétroviseur extérieur selon la revendication 3, **caractérisé en ce que** les moyens d'enclenchement (13) sont réalisés sous la forme de cames d'enclenchement (21) et d'évidements d'enclenchement (20) dont les flancs (24, 25) sont inclinés de façon différente.

23. Rétroviseur extérieur selon l'une au moins des revendications précédentes, **caractérisé en ce que** la tête de rétroviseur (4) peut occuper par rapport au pied de rétroviseur (3) plusieurs niveaux en hauteur, et **en ce qu'**à tous les niveaux en hauteur et dans toutes les positions angulaires en rotation de la tête de rétroviseur (4) il existe au moins une coopération à friction entre la roue dentée (17) et la bague d'enclenchement (17), laquelle est maintenue par le ressort de compression (12).

24. Rétroviseur extérieur selon l'une au moins des revendications précédentes, **caractérisé en ce que** la tête de rétroviseur (4) peut occuper par rapport au pied de rétroviseur (3) deux niveaux en hauteur (H, L), et le passage de la tête de rétroviseur (4) depuis un niveau en hauteur bas (L) vers un niveau en hauteur moyen (H) doit surmonter un troisième niveau en hauteur (Z).

25. Rétroviseur extérieur selon la revendication 24, **caractérisé en ce que** le troisième niveau en hauteur (Z) ne peut être atteint de façon motorisée ni depuis le niveau en hauteur bas (L) ni depuis le niveau en hauteur moyen (H).

26. Rétroviseur extérieur selon l'une ou l'autre des revendications 24 et 25, **caractérisé en ce que** le niveau en hauteur bas (L) n'est possible qu'entre la position de circulation (F) et la position de stationnement (P).

27. Rétroviseur extérieur selon l'une des revendications 24, 25 ou 26, **caractérisé en ce que** le niveau en hauteur moyen (H) n'est possible que dans des positions du rétroviseur (K) déployées vers l'avant en direction de circulation.

28. Rétroviseur extérieur selon l'une des revendications 24, 25, 26 ou 27, **caractérisé en ce que** le troisième niveau en hauteur (Z) n'est possible qu'entre la position de circulation (F) et une position du rétroviseur (K) déployée vers l'avant en direction de circulation.

29. Rétroviseur extérieur selon l'une des revendications 14, 25, 26, 27 ou 28, **caractérisé en ce que** le troisième niveau en hauteur (Z) est atteint seulement brièvement pendant l'exercice d'une force extérieure agissant sur la tête de rétroviseur (4) en direction de circulation, et est ensuite quitté en raison de la dynamique, suite à quoi le niveau en hauteur moyenne (H) est occupé.

30. Rétroviseur extérieur selon l'une des revendications 24, 25, 26, 27, 28 ou 29, **caractérisé en ce que** la transition entre le niveau en hauteur moyen (H) et le troisième niveau en hauteur (Z) est réalisée sous la forme d'une conformation en saillie (26).

31. Rétroviseur extérieur selon la revendication 30, **caractérisé en ce que** la conformation (26) est réalisée sous la forme d'une surface (27) inclinée par rapport au plan de pivotement.

32. Rétroviseur extérieur selon la revendication 31, **caractérisé en ce que** l'inclinaison de la surface (27) est ainsi choisie que la conformation (26) ne peut pas être surmontée par voie motorisée.

33. Rétroviseur extérieur selon l'une ou l'autre des revendications 31 et 32, **caractérisé en ce que** l'inclinaison de la surface (27) est ainsi choisie que la conformation (26) peut être surmontée par une force agissant de l'extérieur sur la tête de rétroviseur (4), telle que la tête de rétroviseur (4) est brièvement soulevée au troisième niveau (Z) à l'encontre de la force du ressort de compression (12) et est ensuite abaissée au niveau bas (L).

34. Rétroviseur extérieur selon l'une au moins des revendications précédentes, **caractérisé en ce que** la surface de friction (16) entre la roue dentée (14) et la bague d'enclenchement (17) est réalisée sous forme conique.

35. Rétroviseur extérieur selon l'une au moins des revendications précédentes, **caractérisé en ce que** les moyens d'enclenchement (13) enclenchés sont susceptibles d'être désenclenchés sous une force extérieure (F_{IF}) agissant sur la tête de rétroviseur (4) en direction de circulation, et sous une force extérieure (F_{GF}) agissant sur la tête de rétroviseur (4) à l'opposé de la direction de circulation, et **en ce que** la tête de rétroviseur (4) est susceptible de se soulever de ce fait par rapport au pied de rétroviseur (3).
